# EUROPEAN PATENT APPLICATION

(11) **EP 4 446 132 A1**
(43) Date of publication of application: **16.10.2024**
(21) Application number: 22903751.0
(22) Date of filing: 16.05.2022
(51) Int. Cl.: B60C 13/00, B60C 15/06, B60C 19/00

(54) **TIRE**

(30) Priority: 08.12.2021 JP 2021199581
(71) Applicant: BRIDGESTONE CORPORATION, Chuo-ku Tokyo 104-8340 (JP)
(72) Inventor: ONO, Takatoshi, Tokyo 104-8340 (JP)
(74) Representative: Marks & Clerk LLP
(86) International application number: PCT/JP2022/020437
(87) International publication number: WO 2023/105813

(57) **Abstract**

A tire 1 includes a side rubber 8, a bead filler 4b, a carcass 5, and a communication device 10, in which the communication device includes a RF tag 10e and a tag coating rubber portion 10f coating the RF tag, the communication device is disposed between the side rubber and the bead filler, a 100% modulus M100 of the side rubber is lower than a 100% modulus M100 of the tag coating rubber portion, a 100% modulus M100 of the tag coating rubber portion is lower than a 100% modulus M100 of a contacting bead filler portion of the bead filler in contact with the communication device, a loss tangent tanδ of the side rubber is greater than a loss tangent tanδ of the contacting bead filler portion, and a thermal conductivity of the carcass cord is higher than a thermal conductivity of each of the contacting bead filler portion and the tag coating rubber portion.

## Description

### TECHNICAL FIELD

This disclosure relates to a tire.

### BACKGROUND

There has been a tire including a communication device (such as a RF tag) (PTL 1).

This application claims Japanese Patent Application No. 2021-199581 filed in Japan on December 8, 2021, the entire contents of which is incorporated herein.

### CITATION LIST

### Patent Literature

PTL 1: JP2021-46057A

### SUMMARY

### (Technical Problem)

However, there has been a demand for improvement in suppression of the damage to the communication device in conventional tires.

It could be helpful to provide a tire that can suppress the damage to the communication device.

### (Solution to Problem)

Our tire is a tire, including
a side rubber,
a bead filler,
a carcass having a carcass ply including a carcass cord, and
a communication device, in which
the communication device includes a RF tag and a tag coating rubber portion coating the RF tag,
the communication device is disposed between the side rubber and the bead filler,
a 100% modulus M100 of the side rubber is lower than a 100% modulus M100 of the tag coating rubber portion,
the 100% modulus M100 of the tag coating rubber portion is lower than a 100% modulus M100 of a contacting bead filler portion of the bead filler in contact with the communication device,
a loss tangent tanδ of the side rubber is greater than a loss tangent tanδ of the contacting bead filler portion, and
a thermal conductivity of the carcass cord is higher than a thermal conductivity of each of the contacting bead filler portion and the tag coating rubber portion.

### (Advantageous Effect)

We can provide a tire that can suppress the damage to the communication device.

### BRIEF DESCRIPTION OF THE DRAWINGS

In the accompanying drawings:
Fig. 1 is a cross-sectional view in a tire width direction illustrating a portion of a tire according to one of the disclosed embodiments in the cross-section taken along the line A-A in Fig. 2;
Fig. 2 is a side view illustrating a portion of the tire in Fig. 1 when the portion of the tire is viewed from the tire widthwise outer side;
Fig. 3 is a perspective view illustrating an example of a communication device that can be use in a tire according to any one of the disclosed embodiments; and
Fig. 4 is an exploded perspective view illustrating the disassembled communication device in Fig. 3.

### DETAILED DESCRIPTION

Our tire can be suitable for use in any type of pneumatic tire, particularly a pneumatic tire for a truck/bus.

By way of example, embodiments of our tire will be described below with reference to the drawings.

Common members and portions appearing in the drawings have the same reference signs. In some of the drawings, the tire width direction is represented by a reference sign "WD", the tire radial direction is represented by a reference sign "RD", and the tire circumferential direction is represented by a reference sign "CD". In this description, the side near the tire inner cavity is referred to as "tire inner side" and the side far from the tire inner cavity from is referred to as "tire outer side".

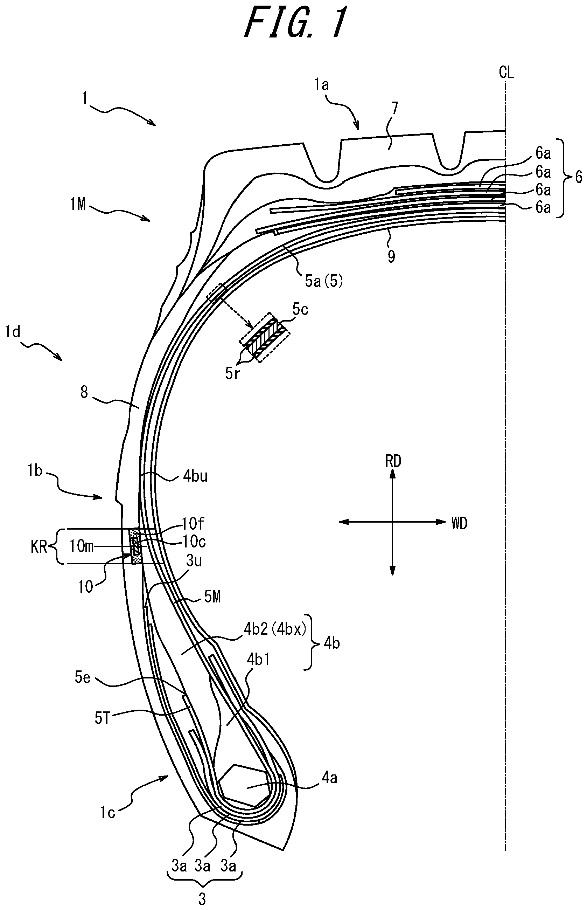

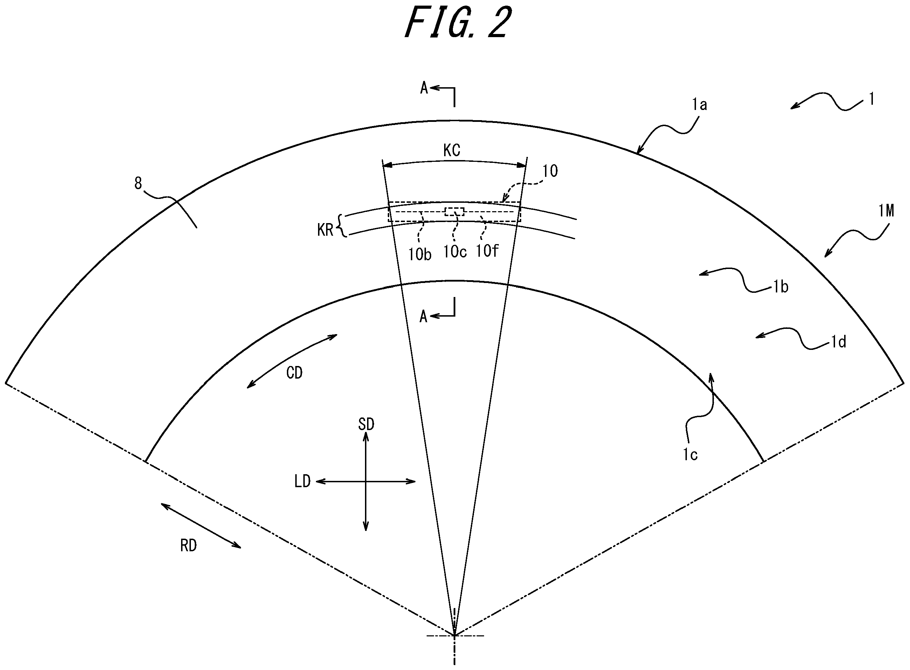

Figs. 1 and 2 illustrate a tire 1 according to one of the disclosed embodiments. Fig. 1 is a cross-sectional view in a tire width direction illustrating a portion of a tire according to one of the disclosed embodiments (specifically, a portion of the tire on one side in relation to the tire equatorial plane CL) in the cross-section taken along the line A-A in Fig. 2. Fig. 2 is a side view illustrating a portion of the tire in Fig. 1 when the portion of the tire is viewed from the tire widthwise outer side.

The tire 1 according to the embodiment in Figs. 1 and 2 is a pneumatic tire for a truck/bus. In this regard, the tire 1 according to any one of the disclosed embodiments can be any type of a tire.

The tire 1 includes a tire body 1M and a communication device 10. The tire body 1M corresponds to a portion of the tire 1 excluding the communication device 10.

Hereinafter, unless otherwise specified, the positional relationship, dimensions, and the like of the components shall be determined under reference conditions where the tire 1 is installed on an applicable rim, set at a prescribed internal pressure, and unloaded. The width, in a tire width direction, of a contact patch that is contact with a road surface under conditions where the tire 1 is installed in an applicable rim, set at a prescribed internal pressure, and subjected to maximum load is referred to as the ground contact width of a tire, and an end of the contact patch in the tire width direction is referred to as ground contact end.

In this description, the term "applicable rim" refers to a standard rim (Measuring Rim in STANDARDS MANUAL of ETRTO and Design Rim in YEAR BOOK of TRA) having an applicable size that is specified or will be specified in an industrial standard effective in the region where pneumatic tires are produced and used, such as JATMA YEAR BOOK of JATMA (the Japan Automobile Tyre Manufacturers Association) in Japan, STANDARDS MANUAL of ETRTO (The European Tyre and Rim Technical Organisation) in Europe, and YEAR BOOK of TRA (The Tire and Rim Association, Inc.) in the United States. However, with regard to sizes that are not specified in the above-mentioned industrial standards, the term "applicable rim" refers to a rim having a width corresponding to the bead width of a pneumatic tire. The "applicable rim" includes sizes that will be specified in the above-described industrial standards, in addition to currently specified sizes. Examples of "size that will be specified" can include a size specified as "FUTURE DEVELOPMENTS" in ETRTO 2013 version.

In this description, the term "prescribed internal pressure" refers to an air pressure corresponding to the maximum load capacity of one wheel having an applicable size and ply rating that is specified or will be specified in an industrial standard such as the above-described JATMA YEAR BOOK (maximum air pressure). However, with regard to sizes not specified in the above-described industrial standards, the term "prescribed internal pressure" refers to an air pressure corresponding to the maximum load capacity defined for each vehicle in which the tire is installed (maximum air pressure). In this description, the term "maximum load" refers to a load corresponding to the maximum load capacity of a tire having an applicable size defined in the above-described industrial standard, or with regard to sizes not specified in the above-described industrial standards, refers to a load corresponding to the maximum load capacity specified for each vehicle in which a tire is installed.

First of all, the tire body 1M will be described.

As illustrated in Fig. 1, the tire body 1M includes the tread portion 1a, a pair of sidewall portions 1b extending from both ends of the tread portion 1a in the tire width direction toward the tire radially inner side, and a pair of bead portions 1c provided at an end, on the tire radially inner side, of each of the sidewall portions 1b. The tread portion 1a is a tire widthwise portion, of the tire body 1M, between a pair of ground contact ends. The bead portion 1c is configured to be in contact with a rim on the tire radially inner side and the tire widthwise outer side when the tire 1 is installed on the rim.

The tire body 1M includes a pair of tire side portions 1d extending from both ends of the tread portion 1a in the tire width direction toward the tire radially inner side. The tire side portion 1d consists of a sidewall portion 1b and a bead portion 1c.

The tire body 1M includes a pair of bead cores 4a, a pair of bead fillers 4b, a carcass 5, a belt 6, a tread rubber 7, a side rubber 8, and an inner liner 9.

The bead cores 4a are embedded in the respective bead portions 1c. The bead core 4a includes a plurality of bead wire coated with a rubber. The bead wire is preferably made of metal (for example, steel). The bead wire can consist of, for example, monofilaments or twisted wires.

The bead fillers 4b is positioned on the tire radially outer side relative to the respective bead cores 4a. The bead filler 4b extends, in a tapered manner, toward the tire radially outer side. The bead filler 4b is made of rubber.

In general, the bead filler can also be referred to as "stiffener".

As illustrated in Fig. 1, the bead filler 4b can be constituted by a plurality of (in the example in Fig. 1, two) bead filler portions 4b1, 4b2. The plurality of bead filler portions 4b1, 4b2 are different in the composition of the rubbers constituting the respective bead filler portions 4b1, 4b2. In this regard, the composition of the rubbers constituting the respective bead filler portions 4b1, 4b2 are substantially homogeneous over the entirety of the bead filler portions 4b1, 4b2. The plurality of bead filler portions 4b1, 4b2 can be different in hardness, for example. The plurality of bead filler portions 4b1, 4b2 are arranged (laminated), for example, in the tire radial direction. For example, of the plurality of bead filler portions 4b1, 4b2, the bead filler portion 4b2, which is positioned on the tire radially outermost side, may be softer than the bead filler portion 4b1.

Alternatively, the bead filler 4b can be constituted solely by one bead filler portion. In other words, the composition of the rubber constituting the bead filler 4b can be substantially homogeneous over the entirety of the bead filler 4b.

As illustrated in Fig. 1, the bead filler 4b is in contact with the communication device 10. In this description, of one or more bead filler portions 4b1, 4b2 constituting the bead filler 4b, the bead filler portion in contact with the communication device 10 is referred to as "contacting bead filler portion 4bx". In the example in Fig. 1, the contacting bead filler portion 4bx is constituted by a bead filler portion 4b2, which is positioned on the tire radially outermost side, of one or more bead filler portions 4b1, 4b2 constituting the bead filler 4b.

The carcass 5 ranges between a pair of bead cores 4a and extends to have a toroidal shape. The carcass 5 is constituted by one or more (the example in Fig. 1, one) carcass plies 5a. Each of the carcass plies 5a includes one or more carcass cords 5c and a coating rubber 5r coating the carcass cord 5c. The carcass cord 5c can be formed by monofilaments or twisted wires.

The carcass cord 5c is preferably made of metal (for example, steel).

The carcass ply 5a includes a ply main body 5M between a pair of bead cores 4a. The carcass ply 5a can further include ply turn-up portions 5T that extend from both ends of the ply main body 5M and are turned up around the bead cores 4a from the tire widthwise inner side toward the tire widthwise outer side. In this regard, the carcass ply 5a may not include ply turn-up portions 5T.

The ply main body 5M is positioned on the tire widthwise inner side relative to the bead filler 4b and the bead core 4a. The ply turn-up portion 5T is positioned on the tire widthwise outer side relative to the bead filler 4b and the bead core 4a.

The carcass 5 is preferably of radial structure and may be of bias structure.

The belt 6 is disposed on the tire radially outer side in relation to the crown portion of the carcass 5. The belt 6 includes one or more (in the example in Fig. 1, four) belt layers 6a. Each of the belt layers 6a includes one or more belt cords and a coating rubber coating the belt cord. The belt cord can be formed of monofilaments or twisted wires. The belt cord is preferably made of metal (for example, steel) but may be made of organic fibers such as polyester, nylon, rayon, and aramid.

At the tread portion 1a, the tread rubber 7 is positioned on the tire radially outer side of the belt 6. The tread rubber 7 constitutes a tread surface, which is a surface on the tire radially outer side of the tread portion 1a. On the tread surface, a tread pattern is formed.

The side rubber 8 is positioned on the sidewall portion 1b. The side rubber 8 constitutes an outer surface, on the tire widthwise outer side, of the sidewall portion 1b. The side rubber 8 is positioned on the tire widthwise outer side relative to the carcass 5. The side rubber 8 is positioned on the tire widthwise outer side relative to the bead filler 4b. The side rubber 8 is formed to be integrated with the tread rubber 7.

The inner liner 9 is disposed on the tire inner side of the carcass, and can be laminated, for example, on the tire inner side of the carcass 5. The inner liner 9 is made of a butyl-based rubber having low air permeability, for example. Examples of the butyl-based rubbers include butyl rubbers and halogenated butyl rubbers, which are derivatives of butyl rubbers. The inner liner 9 is not limited to a butyl-based rubber and may be made of other rubber compositions, resins, or elastomers.

As illustrated in Fig. 1, the tire body 1M can include a reinforcement member 3 around the bead core 4a. The reinforcement member 3 can be disposed on the side opposite to the bead core 4a in relation to the carcass 5. The reinforcement member 3 includes one or more (in the example in Fig. 1, three) reinforcement plies 3a. Each of the reinforcement plies 3a includes a reinforcing cord. The reinforcing cord can be made of metal (for example, steel) and can also be made of organic fibers such as polyester, nylon, rayon, and aramid.

The communication device 10 will be described below. The communication device 10 can be of any configuration as long as the configuration enables wireless communication between the communication device 10 and a predetermined external device (for example, a reader or reader/writer) located at the exterior of the tire 1, and thus, there is no particular limitation on the configuration of the communication device 10.

The communication device 10 includes a RF tag. The RF tag is also referred to as "RFID tag". The RF tag is preferably of passive type but can also be of active type.

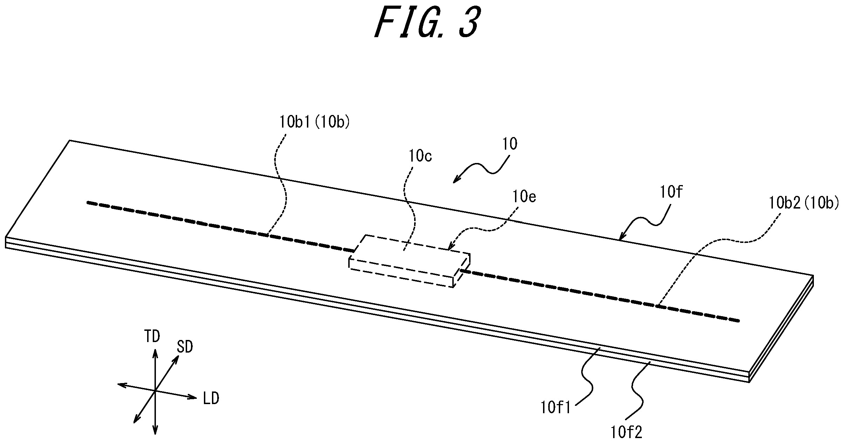

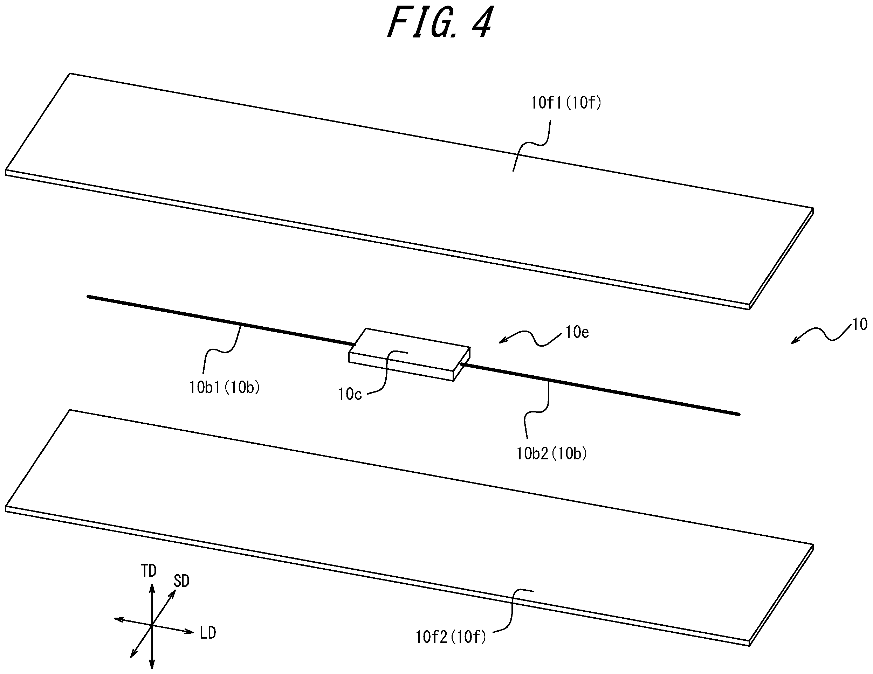

Figs. 3 and 4 illustrates an example of the communication device 10. The communication device 10 includes a RF tag 10e and a tag coating rubber portion 10f. The RF tag 10e includes an IC chip 10c and an antenna portion 10b. In the example in Figs. 3 and 4, the RF tag 10e is of passive type.

The IC chip 10c operates, for example, by an induced electromotive force generated by a radio wave received by the antenna portion 10b. The IC chip 10c includes a controller and a memory unit, for example.

The memory unit can store any information. For example, the memory unit can store identification information of the tire 1. The identification information of the tire 1 is, for example, identification information that is unique to the tire 1 and can identify each tire from the tires, such as the manufacturer of the tire 1, the manufacturing plant of the tire 1, and the date of manufacture of the tire 1. The memory unit can store tire historical information such as the running distance of a tire, the number of sudden braking, the number of sudden starting, and the number of sudden cornering situation. It is also possible that a sensor detecting, for example, a tire internal temperature, a tire internal pressure, a tire acceleration is provided in a tire inner cavity and the memory unit stores information detected by the sensors. In this case, the RF tag 10e can wirelessly communicate with the sensor via the antenna portion 10b to obtain the information detected by the sensor.

The controller is configured to enables reading of information from the memory unit.

The antenna portion 10b includes a pair of antennas 10b1, 10b2. The pair of antenna 10b 1, 10b2 are connected to opposite ends of the IC chip 10c, respectively. The antenna portion 10b is configured to allow for transmitting information to and receiving information from the above-described predetermined external device located at the exterior of the tire 1. In the example in Figs. 3 and 4, each of the antennas 10b1, 10b2 extends in a straight line, but each of the antennas 10b1, 10b2 may extend to have any shape such as waved shape.

The entirety of the RF tag 10e is covered with the tag coating rubber portion 10f. The tag coating rubber portion 10f is made of rubber.

In this example, the tag coating rubber portion 10f includes a pair of sheet-shaped tag coating rubber members 10f1, 10f2. The pair of tag coating rubber members 10f1, 10f2 are stacked to sandwich the RF tag 10e between the pair of tag coating rubber members 10f1, 10f2. The pair of tag coating rubber members 10f1, 10f2 are preferably fixed to each other, for example, by adhesion.

In connection with the matter described above, the tag coating rubber portion 10f may be constituted by one member.

In this example, the tag coating rubber portion 10f has a quadrilateral shape in a planar view. However, the tag coating rubber portion 10f can have any shape in a planar view.

By using the antenna portion 10b, the communication device 10 configured as described above can receive information transmitted on a radio wave or a magnetic field from the above-described predetermined external device. Rectification (in the case of radio wave) or resonance (in the case of a magnetic field) generates power in the antenna portion 10b of the communication device 10, and the memory unit and the controller of the IC chip 10c perform a predetermined operation. For example, the controller reads information in the memory unit and returns (transmits) the information on a radio wave or a magnetic field from the antenna portion 10b to the above-described predetermined external device. The above-described predetermined external device receives the radio waves or the magnetic fields from the communication device 10. The above-described predetermined external device can retrieve the received information to obtain the information stored in the memory unit of the IC chip 10c in the communication device 10.

In connection with the matter described above, the communication device 10 can have any configuration other than the configuration illustrated in this example.

The communication device 10 can be provided with a longitudinal direction LD, a short-side direction SD, and a thickness direction TD. The longitudinal direction LD, the short-side direction SD, and the thickness direction TD are perpendicular to one another.

As illustrated in Figs. 3 and 4, the longitudinal direction LD of the communication device 10 is parallel to the extending direction of the antenna portion 10b. When the antennas 10b1, 10b2 of the antenna portion 10b have waved shapes, the extending direction of the antenna portion 10b refers to the extending direction of the amplitude centerline of each of the antennas 10b 1, 10b2. In the communication device 10, the thickness direction TD of the communication device 10 refers to the thickness direction of the tag coating rubber portion 10f.

The length of the RF tag 10e in the longitudinal direction LD is preferably 20 mm or more or 50 mm or more, for example. The length of the RF tag 10e in the longitudinal direction LD is preferably 100 mm or less or 70 mm or less, for example.

The length of the RF tag 10e in the short-side direction SD is preferably 10 mm or less or 8 mm or less, for example.

The length of the RF tag 10e in the thickness direction TD is preferably 5 mm or less or 2 mm or less, for example.

The length of the communication device 10 in the longitudinal direction LD is preferably 30 mm or more or 60 mm or more, for example. The length of the communication device 10 in the longitudinal direction LD is preferably 110 mm or less or 80 mm or less, for example.

The length of the communication device 10 in the short-side direction SD is preferably 20 mm or less or 15 mm or less, for example.

The length of the communication device 10 in the thickness direction TD is preferably 6 mm or less or 3 mm or less, for example.

The thickness of each of the tag coating rubber members 10f1, 10f2 of the tag coating rubber portion 10f is preferably 0.5 mm or more, for example. The thickness of each of the tag coating rubber members 10f1, 10f2 of the tag coating rubber portion 10f is preferably 1 mm or less, for example.

The entirety of the communication device 10 is embedded in the tire side portion 1d of the tire body 1M.

The communication device 10 is oriented in such a way that the thickness direction TD of the communication device 10 is substantially along the tire width direction (Fig. 1).

In producing a tire 1, the raw tire constituting the tire body 1M and the communication device 10 are accommodated in a mold for forming a tire and subjected to vulcanization molding.

As illustrated in Fig. 1, the communication device 10 is embedded in the sidewall portion 1b. Specifically, the communication device 10 is disposed between the side rubber 8 and the bead filler 4b (specifically, the contacting bead filler portion 4bx) in the tire width direction. The communication device 10 is in contact with a surface of the bead filler 4b on the tire widthwise outer side (specifically, the contacting bead filler portion 4bx).

As described above, by embedding the communication device 10 in the tire body 1M, it is possible to suppress for the communication device 10 to be detached from the tire body 1M or to be damaged, in comparison to the case where the communication device 10 is attached on an outer surface of the tire body 1M.

In general, the metal may weaken a radio wave between the communication device 10 and the above-described predetermined external device (for example, a reader or reader/writer) to reduce communication performance regarding communication between the communication device 10 and the above-described predetermined external device, and in consequence, the communication distance between the communication device 10 and the above-described predetermined external device may be shortened. In the tire body 1M, a metal (for example, steel) can be used in the carcass 5, the belt 6, the bead core 4a, the reinforcement member 3, and the like. In addition, the sidewall portion 1b generally tends to have less amount of metal than the tread portion 1a. Therefore, by disposing the communication device 10 in the sidewall portion 1b, in comparison to the case where the communication device 10 is disposed in the tread portion 1a, the communication performance can be improved and the communication distance between the communication device 10 and the above-described predetermined external device can be lengthened.

By disposing the communication device 10 between the side rubber 8 and the bead filler 4b (specifically, the contacting bead filler portion 4bx), the communication performance can be improved and the communication distance between the communication device 10 and the above-described predetermined external device can be lengthened. In addition, the communication device 10 can be disposed in a portion of the tire body 1M with relatively small strain, for example, in rolling of the tire 1. Therefore, the durability of the communication device 10 and hence the tire 1 can be improved.

The communication device 10 is preferably in contact with a surface of the side rubber 8 on the tire widthwise inner side, as illustrated in Fig. 1.

In connection with the matter described above, there may be a gap between the communication device 10 and the side rubber 8.

It is preferable that other tire components be not present between the communication device 10 and the side rubber 8.

The 100% modulus M100 of the side rubber 8 is lower than the 100% modulus M100 of the tag coating rubber portion 10f, and the 100% modulus M100 of the tag coating rubber portion 10f is lower than the 100% modulus M100 of the contacting bead filler portion 4bx.

In this description, the "100% modulus M100" of a rubber member (such as the side rubber 8, the tag coating rubber portion 10f, and the contacting bead filler portion 4bx) is determined as a modulus or tensile elastic modulus (MPa) by subjecting a vulcanized rubber test piece of the rubber member having a thickness of 2 mm to 100% elongation at 25°C in accordance with JIS K 6251 (2017). As a general rule, as the value of "100% modulus M100" becomes smaller, deformation is made easier (specifically, smaller force is required for a predetermined deformation).

Based on the above-described magnitude relationship of 100% modulus M100, the side rubber 8 is more easily deformable than the tag coating rubber portion 10f, and the tag coating rubber portion 10f is more easily deformable than the contacting bead filler portion 4bx. In other words, as a tire component is positioned in an increasing degree on the tire widthwise outer side, the tire component deforms more easily. In general, as a tire component is positioned in an increasing degree on the tire widthwise outer side, the tire component tends to deform to a larger extent in the rolling of the tire 1. That is to say, the side rubber 8 tends to deform to a larger extent than the tag coating rubber portion 10f deforms, and the tag coating rubber portion 10f tends to deform to a larger extent than the contacting bead filler portion 4bx. Therefore, based on the above-described magnitude relationship of 100% modulus M100, each of the tire components (the side rubber 8, the tag coating rubber portion 10f, and the contacting bead filler portion 4bx) can deform to follow the deflection deformation of the tire 1 in rolling of the tire smoothly. In consequence, the damage to the communication device 10 resulting from the rolling of the tire 1 can be suppressed.

By suppressing the damage to the communication device 10, even if the tire body 1M is subjected to failure, loss of the communication function of the communication device 10 can be suppressed. From a standpoint of managing the tire 1, it is desirable that the communication device 10 have a communication function even after the tire 1 is dismounted from the vehicle for disposal due to failure and the like.

The 100% modulus M100 of the side rubber 8 is preferably 0.6 to 0.9 times the 100% modulus M100 of the tag coating rubber portion 10f. As a result, the damage to the communication device can be further reduced.

The 100% modulus M100 of the contacting bead filler portion 4bx is preferably less than or equal to 1.7 times the 100% modulus M100 of the tag coating rubber portion 10f. As a result, the damage to the communication device can be further suppressed.

The loss tangent tanδ of the side rubber 8 is preferably greater than the loss tangent tanδ of the contacting bead filler portion 4bx.

The thermal conductivity of the carcass cord 5c is preferably higher than the thermal conductivities of the contacting bead filler portion 4bx and the tag coating rubber portion 10f.

In this description, the term "loss tangent tanδ" specifically refers to a loss tangent determined at a temperature of 24°C, a strain of 2%, and a frequency of 52 Hz by using a spectrometer (Ueshima Seisakusho Co., Ltd.). As a general rule, as the value of "loss tangent tanδ" becomes greater, heat buildup due to the deformation is caused to a larger extent.

The "thermal conductivity" shall be determined in accordance with JIS R 1611:2010 for the carcass cord 5c, and for the rubber members (such as the tread rubber 7, the side rubber 8, the contacting bead filler portion 4bx, and the tag coating rubber portion 10f), the "thermal conductivity" shall be determined in accordance with JIS A 1412-2:1999.

Based on the above-described of magnitude relationship of loss tangent tanδ, the side rubber 8 tends to cause heat buildup due to the deformation in rolling of the tire 1 relative to the contacting bead filler portion 4bx. However, the side rubber 8 is positioned on the tire outermost side, and therefore has higher heat dissipation performance than the contacting bead filler portion 4bx. As a result, the amount of heat applied to the communication device 10 can be reduced, and in consequence, the damage to the communication device 10 by heat can be suppressed.

Based on the above-described magnitude relationship of thermal conductivity, heat generated by deformation at an end of the tread rubber 7 or the belt 6 in the rolling of the tire 1 may be transferred to the vicinity of the communication device 10 through the carcass cord 5c. However, based on the above-described magnitude relationship loss tangent tanδ and the above-described magnitude relationship of thermal conductivity, the contacting bead filler portion 4bx positioned between the carcass cord 5c and the communication device 10 blocks heat from the carcass cord 5c to suppress transfer of the heat to the communication device 10 effectively. This can also suppress the damage to the communication device 10 by heat.

The loss tangent tanδ of the side rubber 8 is preferably less than or equal to 2.0 times the loss tangent tanδ of the contacting bead filler portion 4bx.

As a result, heat buildup at the side rubber 8 can be suppressed and the damage to the communication device 10 can be further suppressed.

The thermal conductivity of the carcass cord 5c is preferably higher than each thermal conductivity of all of the rubber members (such as the tread rubber 7, the side rubber 8, the contacting bead filler portion 4bx, and the tag coating rubber portion 10f) constituting the tire 1.

In order to set the thermal conductivity of the carcass cord 5c to be higher than each thermal conductivity of all of the rubber members (such as the tread rubber 7, the side rubber 8, the contacting bead filler portion 4bx, and the tag coating rubber portion 10f) constituting the tire 1, the carcass cord 5c can be made of metal (for example, steel), for example. This is because metals have thermal conductivity much higher than that of rubbers.

The dynamic storage modulus E' of the side rubber 8 is preferably lower than the dynamic storage modulus E' of the contacting bead filler portion 4bx.

In this description, the term "dynamic storage modulus E'" specifically refers to an elastic modulus determined at a temperature of 24°C, a strain of 2%, and a frequency of 52 Hz by using a spectrometer (manufactured by Ueshima Seisakusho Co., Ltd.). As a general rule, greater value of "dynamic storage modulus E'" leads to a harder rubber and less deformation, resulting in better durability.

In the case where interference with projections and the like causes side cut in the side rubber 8 to reach the interior of the contacting bead filler portion 4bx, and in addition, the communication device 10 is exposed at a cross-section of the side cut, as a result of repeated opening and closing of the side cut in rolling of the tire 1, unexpected force may be applied to the communication device 10 to damage the communication device 10.

On that point, as a general rule, based on the above-described magnitude relationship of dynamic storage modulus E', the contacting bead filler portion 4bx is harder than the side rubber 8, and therefore, has better anti-cut resistance. Accordingly, it is possible to stop side cut in the side rubber 8 just before interference with projections and the like causes side cut in the side rubber 8 to reach the interior of the contacting bead filler portion 4bx. As a result, unexpected force applied to the communication device 10 in rolling of the tire 1 can be suppressed, and the damage to the communication device 10 can be suppressed.

The dynamic storage modulus E' of the side rubber 8 is preferably 0.70 to 0.95 times the dynamic storage modulus E' of the contacting bead filler portion 4bx.

As a result, the damage to the communication device 10 can be further suppressed.

As an example of approach of adjusting the 100% modulus M100, loss tangent tanδ, and dynamic storage modulus E' of the rubber members (such as the side rubber 8, the tag coating rubber portion 10f, and the contacting bead filler portion 4bx) to satisfy the respective numerical ranges described above, it is possible that, in the formulation of the rubber, a diene-based polymer is selected from, for example, SBR, BR, and NR, and 50 to 80 phr of filler includes silica in a range of 30 to 80 phr, an accelerator (a known vulcanization accelerator such as DPG, DM, CZ, or NS) in a range of 0.5 to 7 phr, and sulfur (ordinary sulfur and insoluble sulfur) in a range of 0.5 to 10 phr, where these ranges are changed as appropriate.

In the vicinity of the communication device 10, it is preferable that the volume of the contacting bead filler portion 4bx be larger than the volume of the side rubber 8, and in addition, the volume of the side rubber 8 be larger than the volume of the tag coating rubber portion 10f. As a result, the effects of the magnitude relationship of 100% modulus M100, the magnitude relationship of loss tangent tanδ, and/or the magnitude relationship of dynamic storage modulus E' described above can be achieved further, and in consequence, the damage to the communication device can be further suppressed.

From a standpoint of the matters described above, in a case of only viewing an overlapping region where a tire radial direction region KR (Figs. 1 and 2) extending over 10 mm in a tire radial direction centered at a tire radial position of the center of the IC chip 10c of the communication device 10 is overlapped with a tire circumferential direction region KC (Fig. 2) extending over 70 mm in a tire circumferential direction centered at a tire circumferential position of the center of the IC chip 10c, it is preferable that the volume of the contacting bead filler portion 4bx be larger than the volume of the side rubber 8, and in addition, the volume of the side rubber 8 be larger than the volume of the tag coating rubber portion 10f.

The term "the center of the IC chip 10c" refers to the barycenter of the IC chip 10c.

Specifically, the "tire radial direction region KR" (Figs. 1 and 2) is a tire radial direction region that is defined by, as its starting point, a tire radial position 5 mm apart from the tire radial position of the center of the IC chip 10c toward the tire radially inner side, and as its end point, a tire radial position 5 mm apart from the tire radial position of the center of the IC chip 10c toward the tire radially outer side.

Specifically, "tire circumferential direction region KC" (Fig. 2) is a tire circumferential direction region that is defined by, as its starting point a tire circumferential position 35 mm apart from the tire circumferential position of the center of the IC chip 10c toward one side of the tire circumferential direction, and as its end point, a tire circumferential position 35 mm apart from the tire circumferential position of the center of the IC chip 10c toward the other side of the tire circumferential direction, where the extension length of the tire circumferential direction region is 70 mm when the extension length is measured along an arc passing through the center of the IC chip 10c and extending in the tire circumferential direction.

The entirety of the IC chip 10c in the communication device 10 is preferably positioned in the above-described overlapping region. As a result, the damage to the communication device 10 can be further suppressed.

The entirety of the RF tag 10e of the communication device 10 is preferably positioned in the above-described overlapping region. As a result, the damage to the communication device 10 can be further suppressed.

The direction toward which the communication device 10 is oriented (the orientation of the communication device 10) is arbitrary. However, from a standpoint of, for example, the durability of the communication device 10, the communication device 10 is preferably oriented in such a way that the longitudinal direction LD of the communication device 10 is substantially along the tire circumferential direction, as illustrated in the example in Fig. 2. In this regard, the communication device 10 can be oriented in such a way that the short-side direction SD of the communication device 10 is substantially along the tire circumferential direction.

As illustrated in Fig. 1, the tire radial center 10m of the communication device 10 (more preferably, the entirety of the communication device 10) is preferably located on the tire radially outer side relative to the tire radially outer end 5e of the ply turn-up portion 5T of the carcass 5. As a result, the communication performance can be improved and the communication distance between the communication device 10 and the above-described predetermined external device can be lengthened. In addition, the communication device 10 can be disposed in a portion of the tire body 1M with relatively small strain, for example, in rolling of the tire 1. Therefore, the durability of the communication device 10 and hence the tire 1 can be improved

The above-described configuration is particularly preferable when the tire 1 is a pneumatic tire for a truck/bus.

The term "the tire radially outer end 5e of the ply turn-up portion 5T of the carcass 5" refers to a tire radially outer end that is one of the tire radially outer ends of the ply turn-up portion 5T of each carcass ply 5a of the carcass 5 and is located at the tire radially outermost side.

As illustrated in the example in Fig. 1, the tire radial center 10m of the communication device 10 is preferably coincident with the tire radial position of the center of the IC chip 10c of the communication device 10 but the tire radial center 10m may not be coincident with the tire radial position.

As illustrated in Fig. 1, the tire radial center 10m of the communication device 10 (more preferably, the entirety of the communication device 10) is preferably located on the tire radially outer side relative to a tire radially outer end 3u of the reinforcement member 3. As a result, the communication performance can be improved and the communication distance between the communication device 10 and the above-described predetermined external device can be lengthened. In addition, the communication device 10 can be disposed in a portion of the tire body 1M with relatively small strain, for example, in rolling of the tire 1. Therefore, the durability of the communication device 10 and hence the tire 1 can be improved.

The above-described configuration is particularly preferable when the tire 1 is a pneumatic tire for a truck/bus.

The term "the tire radially outer end 3u of the reinforcement member 3" refers to a tire radially outer end that is one of the tire radially outer ends of each reinforcement ply 3a of the reinforcement member 3 and is located on the tire radially outermost side.

The tire radial distance between the tire radial center 10m of the communication device 10 and the tire radially outer end 4bu of the bead filler 4b is preferably 1 to 30 mm, and more preferably 5 to 15 mm.

The above-described configuration is particularly preferable when the tire 1 is a pneumatic tire for a truck/bus.

As illustrated in Fig. 1, the tire radially outer end 5e of the ply turn-up portion 5T of the carcass 5 is preferably positioned on the tire radially inner side relative to the tire radially outer end 4bu of the bead filler 4b. However, the tire radially outer end 5e of the ply turn-up portion 5T of the carcass 5 can be positioned at the same tire radial position as that of the tire radially outer end 4bu of the bead filler 4b, or can be positioned on the tire radially outer side relative to the tire radially outer end 4bu of the bead filler 4b.

The tire radially outer end 3u of the reinforcement member 3 is preferably positioned on the tire radially inner side relative to the tire radially outer end 4bu of the bead filler 4b, as illustrated in Fig. 1. However, the tire radially outer end 3u of the reinforcement member 3 can be positioned at the same tire radial position as that of the tire radially outer end 4bu of the bead filler 4b, or can be positioned on the tire radially outer side relative to the tire radially outer end 4bu of the bead filler 4b.

The tire radially outer end 5e of the ply turn-up portion 5T of the carcass 5 can be positioned on the tire radially inner side relative to the tire maximum width position of the tire body 1M, as illustrated in the example in Fig. 1, and can also be positioned at the same tire radial position as that of the tire maximum width position of the tire body 1M, and can also be positioned on the tire radially outer side relative to the tire maximum width position of the tire body 1M.

The term "tire maximum width position of the tire body 1M" refers to a tire radial position at which the dimension of the tire body 1M in the tire width direction becomes maximum.

The tire radially outer end 3u of the reinforcement member 3 can be positioned on the tire radially inner side relative to the tire maximum width position the tire body 1M, as illustrated in the example in Fig. 1, and can also be positioned at the same tire radial position as that of the tire maximum width position of the tire body 1M, and can also be positioned on the tire radially outer side relative to the tire maximum width position of the tire body 1M.

The tire radial center 10m of the communication device 10 (more preferably, the entirety of the communication device 10) is preferably positioned on the tire radially inner side relative to a tire maximum width position of the tire body 1M. As a result, the communication performance can be improved and the communication distance between the communication device 10 and the above-described predetermined external device can be lengthened. In addition, the communication device 10 can be disposed in a portion of the tire body 1M with relatively small strain, for example, in rolling of the tire 1. Therefore, the durability of the communication device 10 and hence the tire 1 can be improved.

The above-described configuration is particularly preferable when the tire 1 is a pneumatic tire for a truck/bus.

### INDUSTRIAL APPLICABILITY

Our tire can be suitable for use in any type of pneumatic tire, particularly a pneumatic tire for a truck/bus.

### REFERENCE SIGNS LIST

- 1: Tire
- 1M: Tire body
- 1a: Tread portion
- 1b: Sidewall portion
- 1c: Bead portion
- 1d: Tire side portion
- 3: Reinforcement member
- 3a: Reinforcement ply
- 3u: Tire radially outer end of reinforcement member
- 4a: Bead core
- 4b: Bead filler
- 4b 1, 4b2: Bead filler portions
- 4bx: Contacting bead filler portion
- 4bu: Tire radially outer end of bead filler
- 5: Carcass
- 5a: Carcass ply
- 5c: Carcass cord
- 5r: Coating rubber
- 5M: Ply main body
- 5T: Ply turn-up portion
- 5e: Tire radially outer end of ply turn-up portion of carcass
- 6: Belt
- 6a: Belt layer
- 7: Tread rubber
- 8: Side rubber
- 9: Inner liner
- 10: Communication device
- 10e: RF tag
- 10b: Antenna portion
- 10b1, 10b2: Antennas
- 10f: Tag coating rubber portion
- 10f1, 10f2: Tag coating rubber members
- 10c: IC chip
- 10m: Tire radial center of communication device
- CL: Tire equatorial plane
- WD: Tire width direction
- RD: Tire radial direction
- CD: Tire circumferential direction
- LD: Longitudinal direction of communication device
- SD: Short-side direction of communication device
- TD: Thickness direction of communication device

## Claims

1. A tire, comprising:
a side rubber;
a bead filler;
a carcass having a carcass ply including a carcass cord; and
a communication device, wherein
the communication device includes a RF tag and a tag coating rubber portion coating the RF tag,
the communication device is disposed between the side rubber and the bead filler,
a 100% modulus M100 of the side rubber is lower than a 100% modulus M100 of the tag coating rubber portion,
the 100% modulus M100 of the tag coating rubber portion is lower than a 100% modulus M100 of a contacting bead filler portion of the bead filler in contact with the communication device,
a loss tangent tanδ of the side rubber is greater than a loss tangent tanδ of the contacting bead filler portion, and
a thermal conductivity of the carcass cord is higher than a thermal conductivity of each of the contacting bead filler portion and the tag coating rubber portion.

2. The tire according to claim 1, wherein
the RF tag includes an IC chip, and
in a case of only viewing an overlapping region where a tire radial direction region KR extending over 10 mm in a tire radial direction centered at a tire radial position of the center of the IC chip is overlapped with a tire circumferential direction region KC extending over 70 mm in a tire circumferential direction centered at a tire circumferential position of the center of the IC chip, a volume of the contacting bead filler portion is larger than a volume of the side rubber, and in addition, a volume of the side rubber is larger than a volume of the tag coating rubber portion.

3. The tire according to claim 1 or 2, further comprising:
a bead core; and
a reinforcement member around the bead core, the reinforcement member being disposed on a side opposite to the bead core in relation to the carcass, wherein
a tire radial center of the communication device is located on a tire radially outer side relative to a tire radially outer end of the reinforcement member.

4. The tire according to any one of claims 1 to 3, wherein
the communication device is in contact with the side rubber.

5. The tire according to any one of claims 1 to 4, wherein
the 100% modulus M100 of the side rubber is 0.6 to 0.9 times the 100% modulus M100 of the tag coating rubber portion,
a 100% modulus M100 of the contacting bead filler portion is less than or equal to 1.7 times the 100% modulus M100 of the tag coating rubber portion, and
the loss tangent tanδ of the side rubber is less than or equal to 2.0 times the loss tangent tanδ of the contacting bead filler portion.
